# EUROPÄISCHE PATENTSCHRIFT

(11) **EP 1 243 404 B1**
(45) Veröffentlichungstag und Bekanntmachung des Hinweises auf die Patenterteilung: **05.01.2005**
(21) Anmeldenummer: 02005558.8
(22) Anmeldetag: 12.03.2002
(51) Int. Cl.: B29D 30/46, B65H 20/18, D06H 7/02

(54) **Vorschubeinrichtung für Cordbänder**
Feeding device for cord strips
Dispositif d'avance pour des rubans de corde

(30) Priorität: 20.03.2001 DE 10113379
(43) Veröffentlichungstag der Anmeldung: 25.09.2002
(73) Patentinhaber: Karl Eugen Fischer GmbH Maschinenfabrik, D-96224 Burgkunstadt (DE)
(72) Erfinder: Hoffmann, Bernd, 96224 Burgkunstadt (DE)
(74) Vertreter: Matschkur, Peter

(56) Entgegenhaltungen:
- EP-A- 0 430 519
- EP-A- 0 928 680
- DE-A- 498 325
- DE-A- 19 502 868
- US-A- 1 494 683
- US-A- 2 987 081
- US-A- 3 477 397
- US-A- 4 595 133
- US-A- 5 033 341

## Beschreibung

Die Erfindung bezieht sich auf eine Vorschubeinrichtung zur Förderung eines dünnen und klebrigen Bandes, nämlich eines Cordbandes, durch eine Schneidvorrichtung auf ein Förderband zum Abtransport der Cordbandabschnitte, mit einer Zugvorrichtung mit einer die unter dem hochgefahrenen Obermesser der Schneidvorrichtung liegende vorlaufende Cordbandkante ergreifenden Zange um das Cordband um eine der Abschnittbreite entsprechende Strecke von der Abwickelrolle durch die Schneidevorrichtung über das vorzugsweise tieferliegende Abtransport- Förderband zu ziehen, wobei in Förderrichtung vor der Schneideinrichtung ein Niederhalter und eine Anhebevorrichtung zum Festhalten bzw. Anheben des vorlaufenden Cordbandes angeordnet ist.

Bei den meisten bislang bekannten Vorschubeinrichtungen wird das meist von einer Vorratsrolle abgezogene Cordband durch die Schneidvorrichtung geschoben, wodurch sich aber in der Praxis eine ganze Reihe von Schwierigkeiten ergeben. So ist zum einen nur eine eingeschränkte Vorschublänge möglich. Durch den reibungsbehafteten Materialtransport ergeben sich beim Durchschieben neben der Gefahr eines Materialstaus auch Maßungenauigkeiten durch das Verziehen der Cordbänder. Für sehr dünne, labile und spannungsbehaftete Stahl- bzw. Textilcordbänder sowie sonstige Gummimaterialien, lassen sich die bekannten Vorschubeinrichtungen bei Materialdicken < 0,5 mm und Vorschublängen > 800 mm nicht mehr einsetzen. Lediglich für dickere und wenig spannungsbehaftete Stahl- bzw. Textilcordbänder sowie entsprechend dicke Gummibänder lassen sich die bisher bekannten Vorschubeinrichtungen problemlos verwenden.

Eine Verbesserung ergibt sich durch eine Vorschubeinrichtung der eingangs genannten Art, wie sie beispielsweise aus der US 1,494,683 bekannt geworden ist. Dabei werden die Cordbänder nicht durch die Schneidvorrichtung geschoben, sondern durch Zangen gezogen, was eine Reihe der vorstehend beschriebenen Probleme beseitigt. Nach wie vor besteht dabei aber die Schwierigkeit, dass nach dem Schnitt und vor dem Wiederanheben des vorderen Cordbandendes der Niederhalter wieder angehoben wird, sodass etwaige interne Spannungen im Band dazu führen, dass sich die Vorderkante des Bandes verzieht mit entsprechenden negativen Folgen für den nächsten abgeschnittenen Abschnitt.

Der Erfindung liegt daher die Aufgabe zugrunde eine Vorschubeinrichtung, insbesondere für dünne und klebrige Cordbänder so auszugestalten, dass auch dünne und stark klebrige Cordbänder problemlos und ohne die Gefahr eines Verziehens gefördert werden können.

Zur Lösung dieser Aufgabe ist erfindungsgemäß eine Vorschubeinrichtung der eingangs genannten Art dadurch gekennzeichnet dass, der Niederhalter mit einer Klemmvorrichtung zum Anheben des vorlaufenden Cordbandes versehen ist, und eine Einrichtung, die die Klemmvorrichtung nur zum Ziehen das Cordbandes durch die Schneidvorrichtung öffnet, vorgesehen.

Der Niederhalter sichert das Band nicht nur beim Abschneiden und verhindert Bewegungen während des Schneidvorganges, die zu einem fehlerhaften Schnitt oder einem Verziehen des Bandes führen könnten. Auf der anderen Seite kann der mit einer Klemmvorrichtung versehene Niederhalter nach dem Schnitt das vorlaufende Cordbandende verziehungsfrei und ohne dass interne Spannungen im Cordband dieses verziehen können anheben, sodass die Zange die freie Cordbandkante einfach ergreifen kann, wobei erst dann die Klemmvorrichtung wieder gelöst wird. Interne Spannungen im Cordband sind dann durch die Zangen blockiert und können zu keinem Verziehen führen.

Gemäß einem weiteren Merkmal der vorliegenden Erfindung kann dabei vorgesehen sein, dass der Niederhalter eine Platte, vorzugsweise die untere Wand eines Rechteckrohrs, darstellt, das mit Aussparungen für gegenüber der Platte höhenverstellbar angeordnete Magnete, vorzugsweise Permanentmagnete, versehen ist, denen eine das Cordband untergreifende an seinen Enden vorzugsweise vertikal geführte, ferromagnetische Klemmleiste zugeordnet ist.

Durch die in die Aussparungen einragenden Permanentmagnete ist die Klemmleiste mit dem Niederhalter unter Zwischenklemmung des Cordbandes verbunden, sodass beim Anheben des Niederhalters auch das Cordband mit angehoben wird. Soll aber ein solches Anheben nicht stattfinden, nämlich dann, wenn die Zange mit dem eingeklemmten Cordband von der Schneidvorrichtung wegbewegt wird, um das Cordband durch die Schneidvorrichtung zu ziehen, so werden vorher die Permanentmagnete gegenüber dem nach unten gefahrenen Niederhalter angehoben, sodass die magnetische Kraftverbindung zur Klemmleiste entfällt. Beim anschließenden Anheben des Niederhalters bleibt die Klemmleiste liegen und das Cordband kann unbehindert durch die Schneidvorrichtung gezogen werden.

Dabei liegt es schließlich auch noch im Rahmen der Erfindung, dass die Zugvorrichtung unabhängig voneinander sowohl senkrecht als auch parallel zur Schneidkante der Schneidvorrichtung verfahrbar ist, um nicht nur Cordbandabschnitte fördern zu können, deren Schneidkante senkrecht zur Cordbandlängsrichtung verläuft, sondern auch die in der Praxis meist geforderten Cordbandabschnitte mit schrägen Schneidkanten. Je nach dem gewünschten Schneidwinkel werden die Stellmotoren für das senkrechte und das parallele Verschieben der Zugvorrichtung angesteuert. Es versteht sich dabei natürlich von selbst, dass bei solchen schrägen Schnitten die Zuführfördereinrichtung, mit der das Cordband von der Vorratsrolle zur Schneidvorrichtung transportiert wird, ebenfalls in einem entsprechenden Winkel gegenüber der Schneidkante der Schneidvorrichtung verschwenkt ist.

Weitere Vorteile, Merkmale und Einzelheiten der Erfindung ergeben sich aus der nachfolgenden Beschreibung eines Ausführungsbeispieles sowie anhand der Zeichnung. Dabei zeigen:
- Fig. 1: Eine schematische Seitenansicht einer erfindungsgemäßen Vorschubeinrichtung, wobei von der Schneidvorrichtung nur die beiden Messer mit dargestellt sind,
- Fig. 2: eine Draufsicht auf die Vorschubeinrichtung im Bereich der Schneidkante in der Grundstellung der Zange beim Messer der Schneidvorrichtung,
- Fig. 3: eine der Fig. 2 entsprechende Draufsicht in einer Position, in der die Zange durch Ziehen des Cordbandes durch die Schneidvorrichtung zurückgefahren ist und

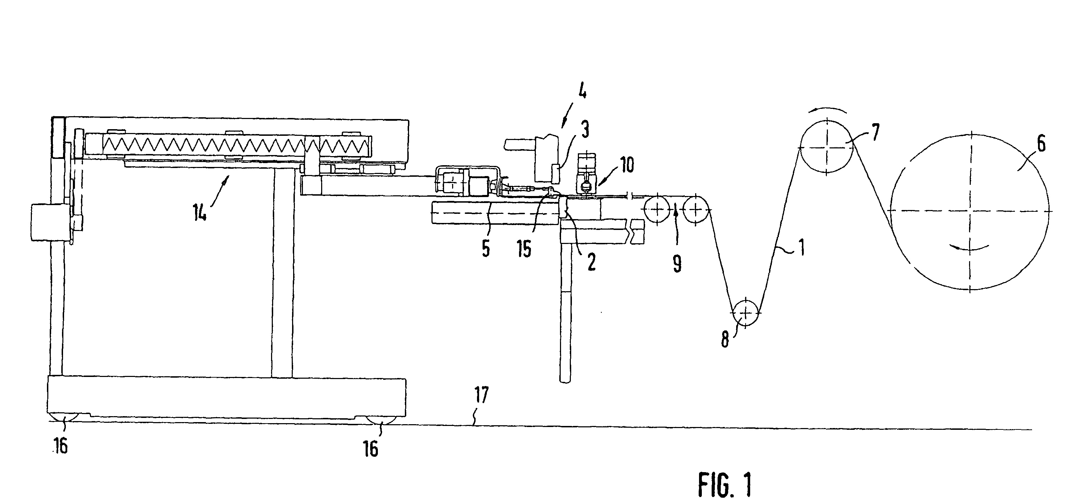

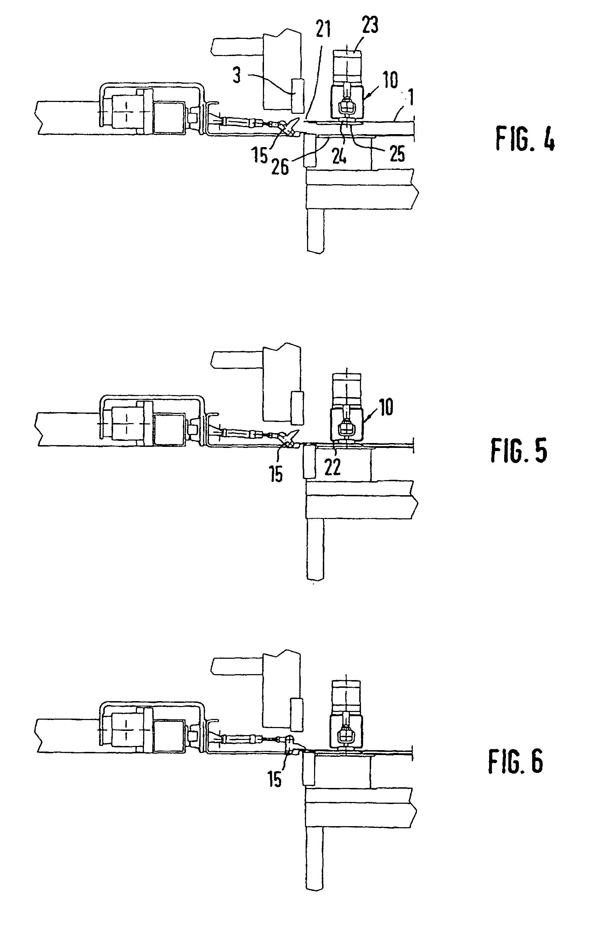

- Fig. 4 bis 13: schematische Teilseitenansichten der Zange und der Schneidmesser mit dem Niederhalter in unterschiedlichen Arbeitspositionen während des Durchziehens des Cordbandes und des Abtransportes der Cordbandabschnitte auf dem nur in Fig. 1 dargestellten Förderband zum Abtransport der Cordbandabschnitte. In den übrigen Figuren ist dieses Abtransportförderband ebenso weggelassen, wie das auch in Fig. 1 schematisch angedeutete Zuführförderband zwischen Vorratsrolle und Schneidvorrichtung, da diese Förderbänder an sich bekannt sind und die Erkennung der Besonderheiten der erfindungsgemäßen Vorschubeinrichtung nur erschweren würden.

Das Cordband 1, von dem mittels der schematisch gezeigten, nämlich nur durch ihre Schneidmesser (Untermesser 2 und bewegliches Obermesser 3) angedeuteten Schneidvorrichtung 4 Abschnitte abgetrennt werden sollen, die über ein Abtransport-Förderband 5 von der Schneidvorrichtung 4 wegtransportiert werden, wird von einer Vorratsrolle 6 abgezogen und über verschiedene Umlenkrollen 7 und 8, durch die auch eine Vorratsschlaufe gebildet wird, einem Einlaufförderband 9 zugeführt. Je nach dem wie der Schnittwinkel bezogen auf die Längsrichtung des Cordbandes ausfallen soll, kann die Zuführfördereinrichtung 9 von der vertikalen Ausrichtung ihrer Längsachse zu den Schneidkanten von Untermesser 2 und Obermesser 3 entsprechend verschwenkt werden.

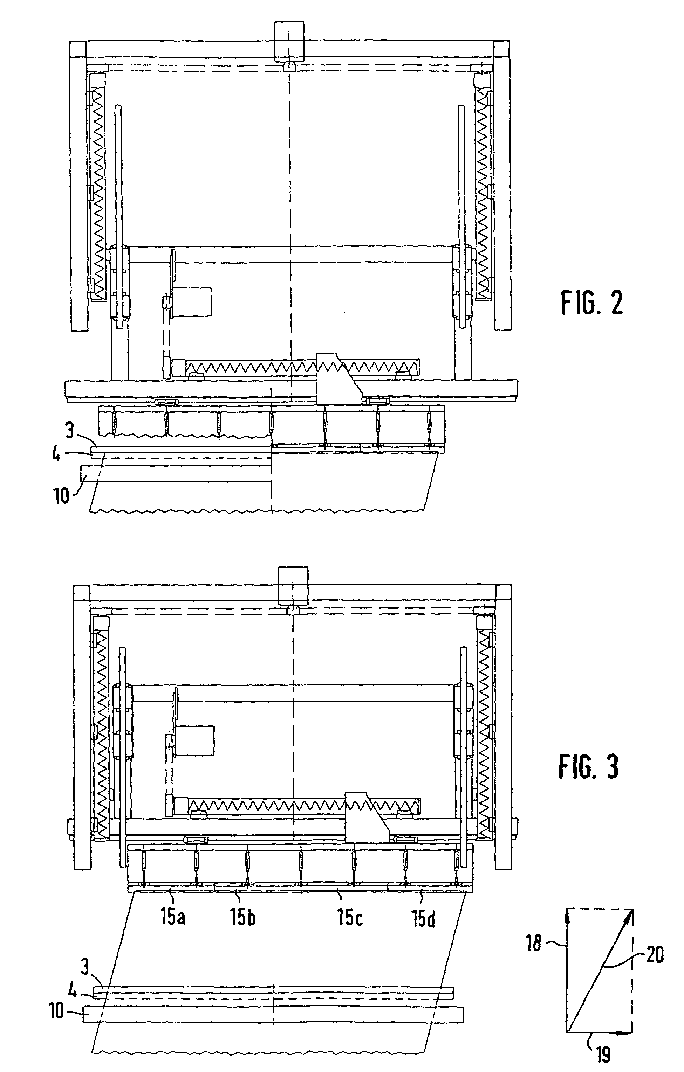

Bei 10 ist ein weiter unten noch näher zu beschreibender Niederhalter zum Andrücken des Cordbandes 1 an das Einlauf-Förderband 9 bzw. einen Schneidtisch dargestellt, während mit 14 eine erfindungsgemäße Zugvorrichtung bezeichnet ist, mithilfe deren das über eine Zange 15 ergreifbare vordere Ende des Cordbandes durch die Schneidvorrichtung 4 gezogen werden kann, um die bereits angesprochenen Nachteile der bisherigen Vorschubeinrichtungen zu vermeiden. Die Laufräder 16 der Zugvorrichtung 14 dienen lediglich der grundsätzlichen Verfahrbarkeit des Zugsystems. Während des eigentlichen Betriebsablaufes spielen diese Laufräder 16 keine Rolle, die Zugvorrichtung 14 ist gegenüber dem Boden 17 blockiert und das Verfahren der Zange 15 erfolgt ausschließlich über zwei Antriebseinrichtungen, die im Einzelnen nicht beschrieben werden. Die eine Antriebseinrichtung zieht die Zange 15 senkrecht zur Kante der Messer und die andere parallel dazu, sodass durch entsprechende Einstellung der Verfahrgeschwindigkeiten jeder beliebige Abzugswinkel erzielt werden kann. Dies ist in Fig. 3 an einem Diagramm dargestellt. Der Pfeil 18 zeigt den Fahrweg der Zange längs einer Achse senkrecht zum Messer, der Pfeil 19 den Fahrweg der Zange längs einer Achse parallel zum Messer und 20 zeigt den resultierenden Fahrweg der Zange und seine Neigung zur Schneidkante.

In Fig. 4 ist die Grundstellung dargestellt, bei der der Niederhalter 10, der im Wesentlichen ein Rechteckrohr umfasst, bei angeklemmtem Cordband 1 angehoben ist, die Zange 15 ist offen und liegt unmittelbar vor der vorlaufenden Kante 21 des Cordbandes. Die Schneidvorrichtung ist ebenfalls offen, das heißt das Obermesser 3 ist nach oben gefahren.

In der unteren Wand 22 des Rechteckrohrs des Niederhalters 10 sind im Einzelnen nicht gezeigte Aussparungen über die gesamte Länge beabstandet angeordnet, in die über Stellmotoren im Oberteil 23 Permanentmagnete 24 eingefahren werden können. Diese Permanentmagnete ziehen in der Position, in der sie in den Aussparungen angeordnet sind, also beispielsweise in Fig. 4, eine unter dem Cordband angeordnete ferromagnetische Klemmleiste 25 an und verklemmen auf diese Art und Weise das Cordband 1 am Niederhalter 10, sodass in dieser Position ein Hochfahren des Niederhalters 10 bedeutet, dass das Cordband 1 ebenfalls vom Schneidtisch 26 mit abgehoben wird, also beispielsweise in die in Fig. 4 gezeigte Grundstellung.

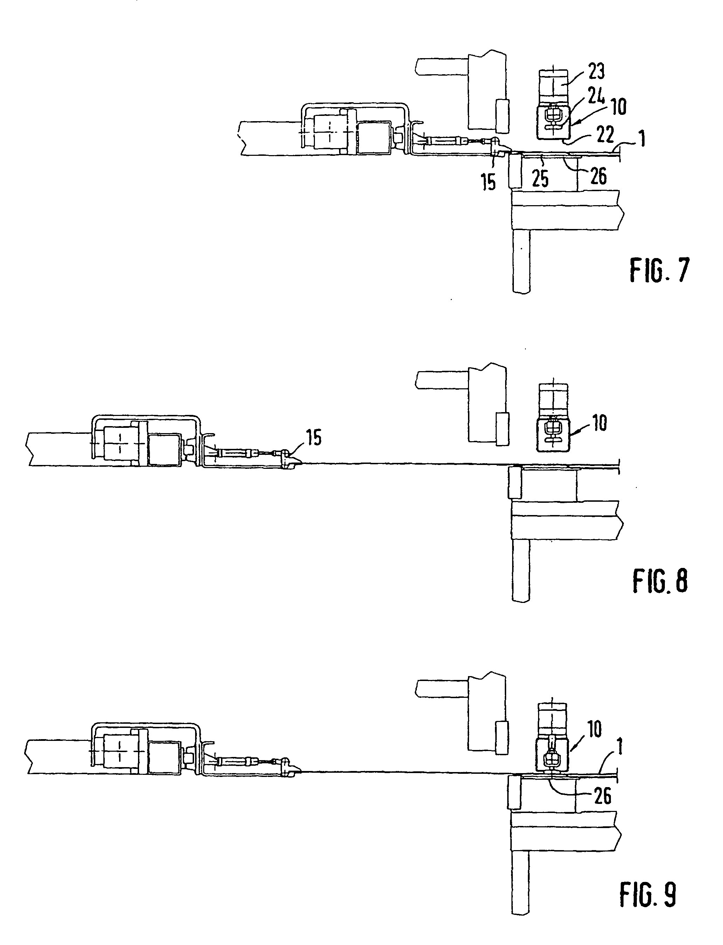

Aus der Grundstellung nach Fig. 4 wird der Niederhalter 10 nach unten gefahren (Fig. 5), wodurch die vorlaufende Kante 21 des Cordbandes 1 auf die offene Zange 15 abgelegt wird. Anschließend schließt die Zange 15, wie dies in Fig. 6 gezeigt ist.

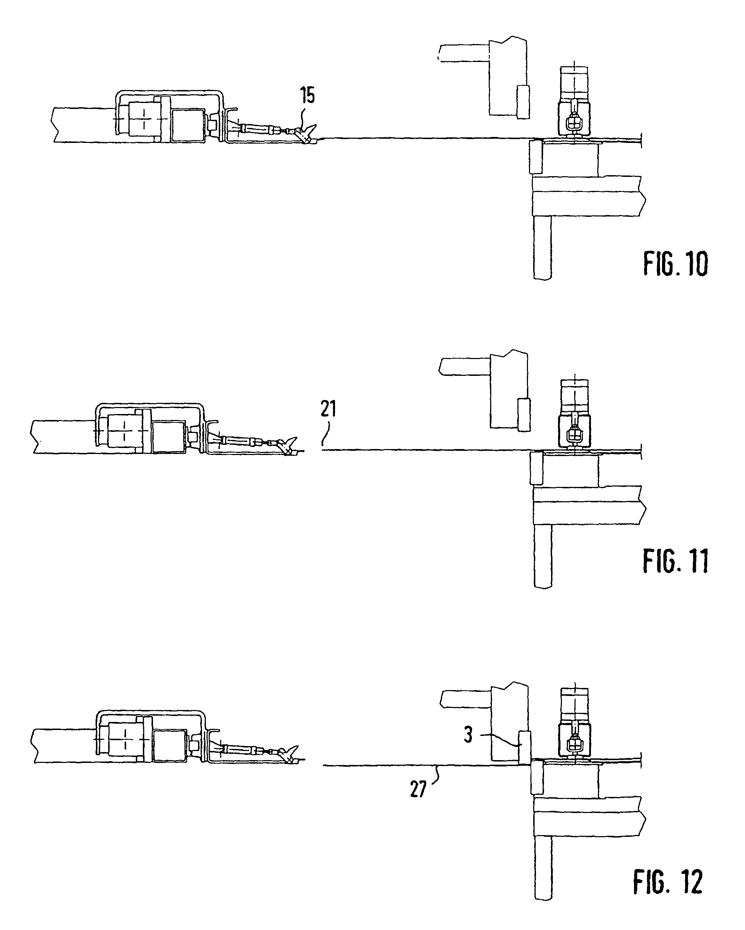

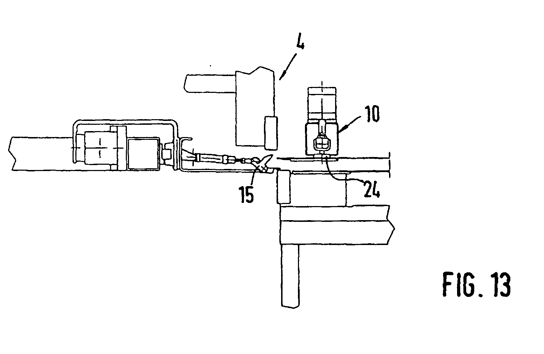

Als nächster Schritt werden zunächst die Permanentmagnete 24 innerhalb des Niederhalters nach oben gefahren, sodass die kraftschlüssige Verbindung zur Klemmleiste 25 entfällt. Wird nunmehr der Niederhalter 10 nach oben in die Position gemäß Fig. 7 gefahren, so bleibt die Klemmleiste 25 auf dem Klemmtisch 26 liegen, ebenso wie das Cordband 1. Das Material, also das Cordband, ist nicht mehr geklemmt. Nunmehr erfolgt der eigentliche Durchzug des Cordbandes 1 durch die Schneidvorrichtung indem die Zange in die nach links verschobene Stellung in Fig. 8 zurückgezogen wird. Mit dieser Verschiebung senkrecht zu den Messern der Schneidvorrichtung 4 kann dabei, wie bereits mehrfach angesprochen, auch eine überlagernde Verschiebung der Zange 15 parallel zu den Schneidkanten der Messer erfolgen, um entsprechend schräg geschnittene Cordbandabschnitte zu erzeugen. Nach dem Durchziehen des Cordbandes durch die geöffnete Schneidvorrichtung in die Position nach Fig. 8, wobei die Länge des durchgezogenen Abschnitts über die Verfahrung der Zange natürlich beliebig eingestellt werden kann, wird der Niederhalter 10 wieder in die Position gemäß Fig. 9 nach unten gefahren und verklemmt das Cordband 1 auf dem Schneidtisch 26. Daraufhin öffnet die Zange 15 und wird ein weiteres Stück nach links verfahren, um das vorlaufende Ende 21 des Cordbandes 1 freizugeben (Position gemäß Fig. 11), sodass beim anschließenden Schnitt durch Herunterfahren des Obermessers 3 ein Cordbandabschnitt 27 erzeugt wird, der frei von irgendwelchen Verzerrungen ist. Dieser abgeschnittene Cordbandabschnitt 27 fällt auf das Abtransport-Förderband 5, wie es in Fig. 1 angedeutet ist und wird mithilfe dessen zu einer Weiterverarbeitungsstation befördert. Anschließend wird die Schneidvorrichtung geöffnet und anschließend der Niederhalter mit nach unten verfahrenen Permanentmagneten 24 wieder nach oben gefahren, während von links die Zange 15 wieder in Position vor der Schneidvorrichtung 4 verbracht wird (Fig. 13). Man hat also dann in Fig. 13 wiederum die Ausgangsposition gemäß Fig. 4 und der Zyklus des Durchziehens, Abschneidens und Abtransports der Cordbandabschnitte kann wieder neu beginnen.

Aus den Fig. 2 bis 3 ist zu erkennen, dass die Zange 15 aus mehreren nebeneinander angeordneten Abschnitten 15a, 15b, 15c, 15d besteht, die einzeln angesteuert werden können. Dies ermöglicht ein besseres Verklemmen über die ganze Breite des Cordbandes unabhängig von der tatsächlichen Cordbandbreite. Bei einer entsprechend langen einstückigen Zange könnten sich Schwierigkeiten beim Klemmen ergeben, derart, dass nicht über die gesamte Kante des Cordbandes ein kraftschlüssiges Verklemmen in der Zange stattfindet, was bei den auftretenden Zugspannungen zu einer Verformung des Bandes über die Breite führen könnte.

Solche Verformungen sollen aber hier unbedingt vermieden werden, da sie beim nachfolgenden Weiterverarbeiten durch Zusammenspleißen der zunächst gebildeten Cordbandabschnitte zu Fehlern führen müssten.

## Patentansprüche

1. Vorschubeinrichtung zur Förderung eines dünnen und klebrigen Bandes, nämlich eines Cordbandes (1), durch eine Schneidvorrichtung (4) auf ein Förderband (5) zum Abtransport der Cordbandabschnitte (27), mit einer Zugvorrichtung (14) mit einer die unter dem hochgefahrenen Obermesser (3) der Schneidvorrichtung (4) liegende vorlaufende Cordbandkante (21) ergreifenden Zange (15) um das Cordband (1) um eine der Abschnittbreite entsprechende Strecke von der Abwickelrolle (6) durch die Schneidevorrichtung (4) über das vorzugsweise tieferliegende Abtransport- Förderband (5) zu ziehen, **dadurch gekennzeichnet, dass** in Förderrichtung vor der Schneideinrichtung (4) ein Niederhalter (10) mit einer Klemmvorrichtung (23, 24, 25) zum Anheben des vorlaufenden Cordbandes (1) angeordnet ist; mit einer Einrichung, die die Klemmvorrichtung (23, 24, 25) nur zum Ziehen des Cordbandes (1) durch die Schneidvorrichtung (4) öffnet.

2. Vorschubeinrichtung nach Anspruch 1, **dadurch gekennzeichnet, dass** der Niederhalter (10) eine Platte, vorzugsweise die untere Wand (22) eines Rechteckrohrs, darstellt, das mit Aussparungen für gegenüber der Platte höhenverstellbar angeordnete Magnete, vorzugsweise Permanentmagnete (24), versehen ist, denen eine das Cordband (1) untergreifende an seinen Enden vorzugsweise vertikal geführte ferromagnetische Klemmleiste (25) zugeordnet ist.

3. Vorschubeinrichtung nach Anspruch 1 oder 2, **dadurch gekennzeichnet, dass** die Zange (15) über die Zugvorrichtung (14) unabhängig voneinander sowohl senkrecht, als auch parallel zur Schneidkante der Schneidvorrichtung (4) verfahrbar ist.

4. Vorschubeinrichtung nach einem der Ansprüche 1 bis 3, **dadurch gekennzeichnet, dass** die Zange (15) aus mehreren unabgängig voneinander verklemmbaren Abschnitten (15a, 15b, 15c, 15d) besteht.

## Claims

1. Feed device for conveying a thin, adhesive strip, in particular a corded strip (1), through a cutting device (4) on a conveyor belt (5) for discharging the lengths (27) of corded strip, comprising a pulling device (14) having pincers (15) which grasp the leading corded strip edge (21) lying below the raised upper blade (3) of the cutting device (4) in order to pull the corded strip (1) - by a distance corresponding to the width of the section - from the unwinding roll (6) through the cutting device (4) over the preferably lower-lying discharge conveyor belt (5), **characterised in that** in the conveying direction upstream of the cutting device (4), a holding-down device (10) is provided, having a clamping device (23, 24, 25) for lifting the leading corded strip (1) and having a device which opens the clamping device (23, 24, 25) only for pulling the corded strip (1) through the cutting device (4).

2. Feed device according to claim 1, **characterised in that** the holding-down device (10) presents a plate, preferably the lower wall (22) of a rectangular tube, provided with recesses for magnets, which are disposed height-adjustably relative to the plate and are preferably permanent magnets (24) and to which a ferromagnetic clamping strip (25) engaging under the corded strip (1) and guided preferably vertically at its ends is allocated.

3. Feed device according to claim 1 or 2, **characterised in that** the pincers (15) are displaceable via the pulling device (14) independently of one another both perpendicular to and parallel to the cutting edge of the cutting device (4).

4. Feed device according to one of claims 1 to 3, **characterised in that** the pincers (15) consist of plural independently clampable sections (15a, 15b, 15c, 15d).

## Revendications

1. Système d'avance pour l'alimentation d'un ruban mince et collant, plus particulièrement d'un ruban de corde (1), à travers un dispositif de coupe (4), sur un tapis d'entraînement (5), en vue de l'évacuation de chaque section de ruban de corde (27), du type comportant un dispositif de traction (14) et une pince (15) s'accrochant au bord du ruban de corde en progression (21) situé au-dessous de la lame supérieure (3) mobile verticalement du dispositif de coupe (4), en vue de tirer le ruban de corde (1) sur un trajet correspondant à la largeur de la section, depuis le rouleau de déroulement (6), à travers le dispositif de coupe (4), au-dessus du tapis d'entraînement et d'évacuation (5) situé de préférence plus bas, **caractérisé en ce que**, devant le dispositif de coupe (4) dans la direction d'alimentation, est disposé un organe de maintien en position abaissée (10) comportant un dispositif de serrage (23, 24, 25), destiné à soulever le ruban de corde (1) en progression et un système qui n'ouvre le dispositif de serrage (23, 24, 25) que pour la traction du ruban de corde (1) à travers le dispositif de coupe (4).

2. Système d'avance selon la revendication 1, **caractérisé en ce que** l'organe de maintien en position abaissée (10) présente une plaque, de préférence la paroi inférieure (22) d'un tube à section carrée comportant des évidements destinés à des aimants disposés vis-à-vis de la plaque, et réglables en hauteur, de préférence des aimants permanents (24), dont l'un est placé de manière à s'accrocher au ruban de corde (1) à ses extrémités, de préférence une tringle de serrage ferromagnétique.

3. Système selon l'une des revendications 1 ou 2, **caractérisé en ce que** la pince (15) peut être déplacée au moyen du dispositif de traction (14), aussi bien verticalement que parallèlement à l'arête de coupe du dispositif de coupe (4), indépendamment l'un de l'autre.

4. Système selon l'une quelconque des revendications 1 à 3, **caractérisé en ce que** la pince (15) se compose de plusieurs sections (15a, 15b, 15c, 15d) pouvant exercer un serrage indépendamment l'une de l'autre.
